# EUROPEAN PATENT APPLICATION

(11) **EP 1 288 336 A1**
(43) Date of publication of application: **05.03.2003**
(21) Application number: 02255181.6
(22) Date of filing: 24.07.2002
(51) Int. Cl.: C23F 11/14, C23F 11/08

(54) **Process for inhibiting corrosion in aqueous systems with halogen treated aromatic azoles**

(30) Priority: 02.08.2001 US 309353 P
(71) Applicant: ROHM AND HAAS COMPANY, Philadelphia, Pennsylvania 19106-2399 (US)
(72) Inventor: Hann, William M., Gwynedd, Pennsylvania 19345 (US); Sanders, Thomas W., Willow Grove, Pennsylvania 19090 (US)
(74) Representative: Kent, Venetia Katherine

(57) **Abstract**

In-situ bromination of aromatic azoles using ppm levels of one or more brominating agents prior to forming a film on a metal surface in an aqueous system and treating deposited unexpectedly effective in improving the chlorine resistance and the corrosion inhibition of the bromine treated aromatic azoles.

## Description

The present invention relates to controlling corrosion in aqueous systems and is directed to a process for improving corrosion inhibiting properties of aromatic azoles in aqueous systems. More particularly, the present invention provides a process for *in-situ* bromination of aromatic azoles, resulting in compositions which exhibit improved chlorine resistance and corrosion inhibition.

Aromatic azoles are commonly used to inhibit corrosion of metals and metal alloys (e.g. copper and copper alloys) in contact with aqueous systems. In industrial cooling water systems, benzotriazole (BZT) and tolyltriazole (TTA) are preferred, based on factors such as commercial availability and cost. Azoles such as TTA are film forming compounds that effectively adsorb to and cover metal surfaces, thereby providing corrosion barriers to aqueous systems in contact with such surfaces. TTA films assist in preventing both loss of metal to the aqueous system as metal ions and oxygen reduction reactions related to metal corrosion. However, while the use of azoles such as BZT and TTA as corrosion inhibitors is widespread, there are drawbacks to their use, limited by their consumption in aqueous systems.

A major source of azole consumption or loss is due to reaction of azoles with oxidizing halogens. Many aqueous systems such as cooling water systems in heat exchangers are treated with oxidizing halogens such as chlorine gas, liquid bromine, chlorine dioxide, iodine/hypoiodous acid solutions, acidic solutions containing hypochlorous and/or hypobromous acids, or alkaline solutions containing hypochlorite and/or hypobromite ions to control microbiological growth. Triazole films, however, are vulnerable to degradation as a result of chemical attack by oxidizing halogens. In particular, TTA films previously deposited on copper or iron alloys degrade when repeatedly exposed to chlorine in aqueous systems and subsequently corrosion protection breaks down. TTA film breakdown inhibits formation of new protective TTA films in cooling systems treated with chlorine, either continuously or periodically. Addition of high dosages of TTA coupled with frequent application often have only limited success in attempts at improving corrosion inhibition.

Oxidizing halogens are themselves consumed or lost in reactions with triazoles in aqueous systems. As the oxidizing halogen reacts with the triazole, the halogen is consumed, reducing its ability to control microbiological growth and requiring additional amounts of the halogen to offset its consumption. In the case of relatively expensive halogens such as bromine the cost versus performance considerations are significantly affected. Other problems associated with repeatedly or continuously exposing triazoles to oxidizing halogens include the formation of volatile by-products possessing objectionable odors that may be released into the environment from the aqueous system, by-products that are less effective corrosion inhibitors and toxic halogen containing organics that may also be released into the environment.

U. S. Patent No. 5,773,627 discloses that halogen containing aromatic azoles, such as chloro-tolyltriazole (Cl-TTA) and bromotolyltriazole (Br-TTA), prepared by an *ex-situ* reaction of high levels of a respective chlorinating and brominating agent and a benzotriazole, are more effective than TTA in inhibiting corrosion in aqueous systems. However, a number of problems are associated with Cl-TTA and Br-TTA, related to toxicity and corrosion. The halogen containing triazoles are particularly undesirable when cooling water from the aqueous system is released into the environment, especially in cases where toxicity to fish population is a concern. Another problem is related to the inherent corrosive effects of films containing significant concentrations of halogen containing triazoles on metals and metal alloys. Different halogen containing triazoles provide differing levels of corrosion protection to metals from attack by halogens related to factors such as the structure of the triazole, triazole packing density, film hydrophobicity and film thickness. Therefore, alternative methods of improving chlorine resistance and slowing the rate of film degradation in aromatic azoles, are still needed.

Inventors have discovered that *in-situ* bromination of TTA and benzotriazole (BZT) using low dosage levels (parts per million) of either aromatic azole and sodium hypobromite prior to forming a film on a metallic surface is surprisingly effective at improving the chlorine resistance and corrosion inhibition of TTA and BZT, whereas *in-situ* chlorination of either aromatic azole is not effective. Corrosion inhibition and chlorine resistance of previously deposited azole films would also be improved by the *in-situ* bromination treatment. Furthermore, the *in-situ* bromination process reduces the formation of volatile by-products possessing objectionable odors and minimizes toxic by-products.

The present invention provides a process for inhibiting metal corrosion in an aqueous system comprising the steps of pre-mixing an aqueous solution of one or more aromatic azoles with one or more brominating agents, wherein the total concentration of bromine present expressed as chlorine is between about 0.1 to 20 ppm; and adding the bromine treated aromatic azole to the aqueous system.

The present invention also provides a process for inhibiting metal corrosion in an aqueous system comprising the steps of contacting a film comprising one or more aromatic azoles covering a metal surface with one or more brominating agents *in-situ,* wherein the total concentration of bromine present expressed as chlorine is between about 0.1 to 20 ppm; and exposing the bromine treated film in contact with the aqueous system to an oxidizing halogen.

The present invention also provides a process of inhibiting metal corrosion in an aqueous system including one or more aromatic azoles comprising the step of adding one or more brominating agents, wherein the total concentration of bromine present in the aqueous system and expressed as chlorine is between about 0.1 to 20 ppm.

Accordingly, the present invention provides a process for inhibiting corrosion of metallic components used in the manufacture of commercial equipment associated with aqueous systems and that require corrosion protection. "Aqueous system" refers to any system containing metallic components which are in contact with aqueous fluids on a periodic or continuous basis. The term "aqueous fluids" refers to fluids containing 5 weight percent or more water and includes water-based fluids. Water based fluids refer to fluids containing a minimum of 40 percent by weight water, the remainder being suspended and/or dissolved solids and compounds that are soluble in water. "Non-aqueous system" refers to any system containing metallic components which are in contact with non-aqueous fluids on a periodic or continuous basis. Non-aqueous fluids may be miscible or immiscible in water.

Typical aqueous systems include, for example, recirculating cooling units, open recirculating cooling units that utilize evaporation as a source of cooling, closed loop cooling units, heat exchanger units, reactors, equipment used for storing and handling liquids, boilers and related steam generating units, radiators, flash evaporating units, refrigeration units, reverse osmosis equipment, gas scrubbing units, blast furnaces, paper and pulp processing equipment, sugar evaporating units, steam power plants, geothermal units, nuclear cooling units, water treatment units, food and beverage processing equipment, pool recirculating units, mining circuits, closed loop heating units, machining fluids used in operations such as for example drilling, boring, milling, reaming, drawing, broaching, turning, cutting, sewing, grinding, thread cutting, shaping, spinning and rolling, hydraulic fluids, cooling fluids, oil production units and drilling fluids. Typical examples of aqueous fluids include fresh water, brackish water, sea water, waste water, mixtures of water and salts (known as brines), mixtures of water and alcohol such as methanol, ethanol and ethylene glycol, mixtures of water and acids such as mineral acids, mixtures of water and bases such as caustic and combinations thereof. Aqueous systems treated using the process of this invention may contain dissolved oxygen or may contain no oxygen. The aqueous systems may contain other dissolved gases such as, for example, carbon dioxide, ammonia and hydrogen sulfide.

The metallic components in contact with the aqueous system are processed from any metal for which corrosion and/or scaling can be prevented. Typical examples of metals requiring corrosion protection are copper, copper alloys, aluminum, aluminum alloys, ferrous metals such as iron, steels such as low carbon steel, chromium steel and stainless steel, iron alloys and combinations thereof.

Different types of metal corrosion are encountered in aqueous systems such as, for example, uniform corrosion over the entire metal surface and localized corrosion such as pitting and crevice forming. Often, control of localized corrosion may be the critical factor in prolonging the useful life of the metal components in contact with the aqueous system. Aqueous systems containing significant concentrations (also known as dosage levels) of anions such as chloride and sulfate are prone to both uniform and localized corrosion. These anions are often present in the aqueous fluids used in the system. Uniform and localized corrosion often result in the failure of the metallic components requiring replacement or extensive repairs and maintenance, both shutting down operation of the aqueous system. Therefore, the present invention provides a process for inhibiting metal corrosion and improving the chlorine resistance of aromatic azoles used as corrosion inhibitors in aqueous systems.

Accordingly, aromatic azoles pre-treated with low concentrations (about 20 ppm to 0.1 ppm) of a brominating agent, wherein the total concentration of bromine present is expressed as chlorine, exhibited lower corrosion rates than aromatic azoles in the absence of a bromine pre-treatment. The amount of bromine expressed as chlorine refers to the concentration of bromine (mg/L or ppm) expressed as an equivalent concentration of chlorine. *In-situ* bromination of aromatic azoles including for example TTA and BZT using low dosage levels (ppm levels) of both the aromatic azole and a brominating agent such as for example NaOBr prior to forming a film on a metal surface is surprisingly effective in improving the chlorine resistance of azoles such as TTA and BZT. The discovery is unexpected in view of the prior knowledge that chlorination of azole treated systems leads to degradation of corrosion inhibition performance and that *in-situ* chlorination of the same aromatic azoles using low concentrations (20 ppm or less) of a chlorinating agent is not effective in improving the chlorine resistance. Moreover, the discovery is in direct contrast to a disclosure in U. S. Patent No. 5,773,627, reciting that the *ex-situ* preparation of a halo-benzotriazole provided a corrosion inhibitor which exhibited a surprising and unexpected activity when compared to a treatment comprising a mixture of a benzotriazole and a halogen. The '627 patent explicitly discloses and teaches that the results clearly show that mere mixtures of a benzotriazole and a halogen in a cooling water system do not provide the corrosion inhibiting effect of the addition of a halo-benzotriazole prepared *ex-situ*. Contrary to the teaching and disclosure of the '627 patent, the inventors have discovered that *in-situ* bromination of aromatic azoles in an aqueous system, for example such as the cooling water in a water treatment system, provides excellent corrosion inhibition and improved chlorine resistance.

Aromatic azoles usefully employed in accordance with the present invention include but are not limited to tolyltriazole (TTA), benzotriazole (BZT), butyl benzotriazole, sulfonotolyltriazole, carboxybenzotriazole, 2-mercaptobenzothiazole, N,N-bis(2-ethylhexyl)-ar-methyl-1H-benzotriazole-1-methanamine and combinations thereof. Preferred azoles are TTA and BZT.

The process of *in-situ* bromination or pre-treating aromatic azoles with one or more brominating agents can be accomplished by any suitable brominating agents known by those skilled in the art. Examples of brominating agents usefully employed include but are not limited to hypobromite, bromine, alkaline solutions of bromine, bromonium ions, bromine complexes (e.g. Lewis acid complexes with aluminum anions), hypobromous acid, mixtures of NaBr and NaOCl, dibromonitrilopropionamide, bromodichlorohydantoin, 1,2-dibromo-2,4-dicyanobutane, 2-bromo-2'-nitrostyrene, 2-bromo-4'-hydroxyacetophenone, 5-bromo-2-nitropropane-1,3-diol, 5-bromo-5-nitro-1,3-dioxane, 1-bromo-3-chloro-5,5-dimethylhydantoin, 3-bromo-1-chloro-5,5-dimethylhydantoin, 1-bromo-3-chloro-5-ethyl-5-methylhydantoin, 3-bromo-1-chloro-5-ethyl-5-methylhydantoin, and combinations thereof. The *in-situ* bromination process has several key advantages. Brominating agents are relatively expensive as compared to chlorinating agents. Low levels (about 0.1 to 20 ppm) of the brominating agent are required in the process of the present invention, as compared to the amounts employed in the ex-situ process disclosed in U. S. Patent No. 5,773,627. Bromine concentrations as low as from about 0.1 to 5 ppm expressed as chlorine were effective at lowering rates of corrosion and increasing chlorine resistance. The brominating agent can be generated by an economical means of mixing NaBr with NaOCl and generating hypobromite *in-situ*. The method does not require preparing a bromo-benzotriazole through an *ex-situ* reaction of the benzotriazole with equivalent or excess amounts of bromine in an aqueous solution and then isolating the product as a solid. For convenience of application, the process can be carried out at neutral pH or weakly alkaline solution such as that found in cooling water or city water systems. Furthermore, the *in-situ* bromination process reduces the formation of volatile by-products possessing objectionable odors and minimizes toxic by-products.

In an alternative embodiment, the process of *in-situ* bromination can be accomplished by reactions of bromide ion with hypochlorite, N-chlorosuccinimide, chlorine and other chlorinating agents known by those having skill in the art. For convenience of application, the process can be carried out at neutral pH or weakly alkaline solution such as that found in cooling water or city water systems.

Separate processes of *in-situ* fluorination and iodination of aromatic azoles are contemplated. Pre-treating aromatic azoles with one or more fluorinating or iodinating agents can be accomplished by any suitable agents known by those skilled in the art. Suitable fluorinating agents include for example fluorine, alkaline and alkaline earth fluorides, metal fluorides, hypofluorous acid, hydrofluoric acid, mixtures of fluorides and chlorinating agents and combinations thereof. Suitable iodinating agents include for example iodine, alkaline and alkaline earth iodides, metal iodides, hypoiodous acid, hydroiodic acid, iodine complexes, iodo propenyl butyl carbamate, iodo polyvinyl pyrollidone, mixtures of iodides and chorinating agents and combinations thereof.

In a preferred embodiment, TTA pre-treated with low concentrations of hypobromite (about 1 to 5 ppm expressed as chlorine) in weakly alkaline solution (Table 1) exhibited significantly lower corrosion rates as compared to TTA controls in the absence of hypobromite pre-treatment. The lowered corrosion rate for *in-situ* brominated TTA was observed regardless of changes in key test conditions including the level (ppm) of alkalinity of the aqueous solution, type of corrosion inhibiting formulation (stabilized phosphate vs. all organic), and the bromination process variables including levels (ppm) of brominating agent, number of brominations and the time duration of the *in-situ* bromine treatments. Although the mechanism of improved chlorine resistance for aromatic azoles pre-treated with a brominating agent is not well understood, it is contemplated that bromination of the aromatic ring of the azole occurs via an electrophilic aromatic substitution reaction mechanism.

The bromine treated aromatic azoles can be introduced into the aqueous system by any conventional method and may be fed into the aqueous system on either a periodic or continuous basis. Alternatively, low dosages of the brominating agent (about 20 ppm or less) can be added to the aqueous system to provide *in-situ* bromine treatment of previously deposited azole films. Corrosion inhibition and chlorine resistance of previously deposited azole films subsequently exposed to oxidizing halogens such as chlorine would be improved by the *in-situ* bromination treatment as compared to untreated azole films.

In treating an aqueous system in accordance with the present invention, the standard technique using bromine as a biocide in the cooling water of a water treatment system includes feeding NaBr and NaOCl solutions into a side stream, then passing the mixture through a static mixer and then on to the main cooling water flow. In a preferred embodiment, in-situ bromination of TTA is accomplished using a longer side stream with two static mixers. NaBr and NaOCl are slug fed before the first mixer, with TTA being slug fed between the first and second mixers. Slug feeds can be performed one or more times per week, depending on analysis of the cooling water system. Chlorine would be used the rest of the time as the biocide, being slug fed as needed using the NaOCl feed before the first static mixer. The film of *in-situ* brominated aromatic triazole on the metal surface provides better corrosion inhibition and chlorine resistance than TTA films in the absence of the bromine pre-treatment.

In an alternative embodiment to treating an aqueous system in accordance with the present invention, the bromine treated TTA or BZT feeds are added continuously to the water. A preferred treatment concentration ranges from about 0.1 to 10 parts per million, most preferably at about 3 parts per million. Continuous feed is not, however, a requirement. The bromine treated TTA or BZT can be added at a concentration sufficient to form a protective film and thereafter chlorine feeds can follow. Feeds of bromine treated TTA or BZT can be fed into the aqueous system as required from analysis of the aqueous system.

The *in-situ* bromination process employed in accordance with the present invention can be used in combination with other corrosion and/or deposit inhibiting treatments known in the art including but not limited to zinc phosphates, phosphonates, acrylic homo- and copolymers, chelants, and oximes. The process is effective at inhibiting corrosion on metals and metal alloys including for example metals selected from the group consisting of copper, copper alloys, carbon steels, aluminum, aluminum alloys, stainless steels and combinations thereof. The process is particularly useful for inhibiting corrosion of metals and metal alloys used in the manufacture of systems such as for example cooling water, water treatment and heat exchanger systems.

The present inventors have also discovered the *in-situ* bromination process can be performed in neutral pH to weakly alkaline aqueous solution, eliminating the need to isolate solid halo-benzotriazoles. The resulting aqueous solution is easily transported, handled and applied as a corrosion inhibitor in aqueous systems. Advantages of the present invention are that low levels of bromine pre-treatment of aromatic azoles including TTA and BZT provide an economical approach to achieving chlorine resistance in aqueous systems treated with azole based corrosion inhibitors. In addition, the low levels of brominating agents required provide minimal release of significant concentrations of halogenated aromatic azoles to the environment from the aqueous system as compared to the use of Br-TTA and Cl-TTA corrosion inhibitors. It is contemplated that iodine pre-treatment of aromatic azoles as well would provide improved chlorine resistance in aqueous systems treated with azole based corrosion inhibitors.

The bromine treated azoles can be fed alone into the aqueous system or can be fed with other water treatment additives such as scale inhibitors, biocides, dispersants, de-foamers, fluorescent tracer compounds, other corrosion inhibitors and combinations thereof.

The present invention will now be further described with reference to TTA and BZT (Examples 1 and 2) summarized in Tables 1-5, which are to be regarded solely as illustrative and not as restricting the scope of the present invention.

### Experimental Protocol for TTA (Example 1) and BZT (Example 2):

For both TTA and BZT experimental runs, single or multiple chlorinations or brominations were performed. Each chlorine or bromine slug was destroyed by reaction with thiosulfate after the indicated number of hours. After the last destruction, copper wire was added to the solution and the chlorine or bromine treated triazole was adsorbed on copper wire.

### Water Chemistry and Conditions:

NaCl - 500 ppm
Ca/Mg - 200/100 ppm (as CaCO₃)
M-Alkalinity-15 or 200 ppm (as CaCO₃)
Tolyltriazole (TTA) or Benzotriazole (BZT)- 3 ppm (as actives)
Formulation - 11.5 ppm all-organic or 26 ppm stabilized phosphate

### All-organic

Hydroxyethylidene diphosphonic acid (HEDP)-5 ppm (as phosphate)
Phosphonobutane tricarboxylic acid (PBTC)- 2 ppm (as phosphate)
Acumer® 2000- 7 ppm (as actives)

### Stabilized phosphate

Phosphoric acid- 8 ppm (as phosphate)
Hydroxyethylidene diphosphonic acid (HEDP)-5 ppm (as phosphate)
Acumer® 2000- 5 ppm (as actives)
Tetrapotassium pyrophosphate- 8 ppm (as phosphate)

Volume/Surface Area - 264 mL water/in² Cu
Room temperature
pH - 7.0-8.6
Stirred 18 hour film time
5 ppm NaOCl as Cl₂ at end of 18 hours
0.5 hour chlorine exposure time after filming
Magnetic stirring @ 300 rpm

### Procedure:

Before adding copper wire, chlorine or bromine slugs are added to the water. Each slug is destroyed by reaction with thiosulfate after the indicated number of hours (see Tables). Chlorination: 1-3 slugs of 1-10 ppm NaOCl, expressed as Cl₂.
Bromination: 1-3 slugs of 1-5 ppm NaOBr, expressed as Cl₂ (from NaOCl/NaBr mix, 1/1 molar as Cl₂). After the last slug is destroyed, the copper wire is added and azole filming on the wire occurs over an 18 hr period. After 18 hr, 5 ppm NaOCl, expressed as Cl₂ is added. Thirty minutes after adding NaOCl, corrosion rate is measured using EG&G Princeton Applied Research Potentiostat/Galvanostat Model 273.

As shown in Table 1, this example demonstrates the improved chlorine resistance of bromine treated TTA films as compared to TTA films in the absence of such a treatment.

### Example 1: In-situ Halogenation of TTA

**Table 1.**

| Tolyltriazole Chlorine Resistance, after NaOBr Pre-treatment | | | | | |
|---|---|---|---|---|---|
| | | NaOBr Slug Pretreatment of TTA | | | |
| ppm Alk | Formulation | ppm NaOBr as Cl₂ | # of Slugs | Hours | Corrosion Rate, mpy |
| 200 | All-organic | 1 | 3 | 1 | 0.12 (2) |
| 200 | Stabilized phosphate | 3 | 1 | 1 | 0.57 (2) |
| 200 | Stabilized phosphate | 3 | 2 | 1 | 0.13 |
| 200 | Stabilized phosphate | 5 | 1 | 6 | 0.12 |
| 15 | Stabilized phosphate | 1 | 3 | 1 | 0.25 |
| 200 | All-organic | --- | --- | --- | 0.55 |
| 200 | Stabilized phosphate | --- | --- | --- | 1.00 (2) |
| 15 | Stabilized phosphate | --- | --- | --- | 3.43 (16) |
| Four data entries are averages of number of data points in parentheses. | | | | | |

TTA pre-treated with low levels of hypobromite in weakly alkaline solution (Table 1) exhibited significantly lower corrosion rates as compared to TTA controls in the absence of hypobromite pre-treatment. In contrast to bromination, TTA pre-treated with low levels of hypochlorite in weakly alkaline solution (Table 2) exhibited significantly higher corrosion rates as compared to TTA controls in the absence of hypochlorite pre-treatment. The increased corrosion rate for *in-situ* chlorinated TTA was observed regardless of changes in key test conditions including the level (ppm) of alkalinity of the aqueous solution and the chlorination process variables including levels (ppm) of chlorinating agent, number of chlorinations and the time duration of the *in-situ* chlorine treatments.

**Table 2.**

| Tolyltriazole Chlorine Resistance, after NaOCl Pretreatment | | | | | |
|---|---|---|---|---|---|
| | | NaOCl Slug Pretreatment of TTA | | | |
| ppm Alk | Formulation | ppm NaOCl as Cl₂ | # of Slugs | Hours | Corrosion Rate, mpy |
| 200 | Stabilized phosphate | 10 | 1 | 1 | 1.75 |
| 15 | Stabilized phosphate | 1 | 1 | 1 | 6.70 |
| 15 | Stabilized phosphate | 1 | 2 | 1 | 6.96 |
| 15 | Stabilized phosphate | 1 | 3 | 1 | 6.94 |
| 15 | Stabilized phosphate | 1 | 1 | 18 | 6.68 |
| 15 | Stabilized phosphate | 3 | 1 | 18 | 7.16 |
| 15 | Stabilized phosphate | 10 | 1 | 18 | 7.38 |
| 200 | Stabilized phosphate | --- | --- | --- | 1.00 (2) |
| 15 | Stabilized phosphate | --- | --- | --- | 3.43 (16) |
| Two data entries are averages of number of data points in parentheses | | | | | |

Based on the results, it is contemplated that if *in-situ* bromination of the aromatic triazole ring occurs via electrophilic aromatic substitution, then *in-situ* chlorination cannot undergo electrophilic aromatic substitution and likely produces N-chloro TTA, which is a relatively poor corrosion inhibitor as compared to TTA.

Pre-treatment of TTA by a brominating agent in an aqueous system modifies the chemical structure of TTA in some manner, as evidenced by the Hach test (Table 3). The Hach test (DR/3000 Procedure Code T.3; 0-20 mg/L, UV Photolysis Method) accurately measures the total levels of TTA remaining after *in-situ* bromination. From Table 3, measured amounts of TTA are less than 2 ppm, whereas in the absence of pre-treatment with a brominating agent, all the charged TTA is measured, indicating no change in the chemical structure of TTA. In contrast, *in-situ* chlorination of TTA does not appear to alter the chemical structure of TTA in the same manner as *in-situ* bromination, since the Hach test measures no changes in the level of TTA, indicating that N-chloro TTA responds in a manner similar to TTA in the Hach test.

**Table 3.**

| Effect of Halogenation on Measurement of Tolyltriazole (Initial Charge of TTA: 3ppm) | | | | | | |
|---|---|---|---|---|---|---|
| | | NaOX Slug Pretreatment of TTA | | | | |
| ppm Alk | Formulation | Oxidant | ppm NaOX as Cl₂ | # of Slugs | Hours | Measured ppm TTA |
| 200 | All-organic | NaOBr | 1 | 3 | 1 | 1.8 (2) |
| 200 | Stabilized phosphate | NaOBr | 3 | 1 | 1 | 1.6 (2) |
| 200 | Stabilized phosphate | NaOBr | 3 | 2 | 1 | 1.4 |
| 200 | Stabilized phosphate | NaOBr | 5 | 1 | 6 | 1.5 |
| 15 | Stabilized phosphate | NaOBr | 1 | 3 | 1 | 1.7 |
| 200 | Stabilized phosphate | NaOCl | 10 | 1 | 1 | 2.9 |
| 15 | Stabilized phosphate | NaOCl | 1 | 1 | 1 | 3.2 |
| 15 | Stabilized phosphate | NaOCl | 1 | 2 | 1 | 3.1 |
| 15 | Stabilized phosphate | NaOCl | 1 | 3 | 1 | 3.3 |
| 15 | Stabilized phosphate | NaOCl | 1 | 1 | 18 | 2.7 |
| 15 | Stabilized phosphate | NaOCl | 3 | 1 | 18 | 2.8 |
| 15 | Stabilized phosphate | NaOCl | 10 | 1 | 18 | 2.8 |
| 200 | All-organic | --- | --- | --- | --- | 3.4 |
| 200 | Stabilized phosphate | --- | --- | --- | --- | 3.4 (2) |
| 15 | Stabilized phosphate | --- | --- | --- | --- | 3.1 (16) |
| Four data entries are averages of number of data points in parentheses | | | | | | |

### Example 2: In-situ Halogenation of BZT

Benzotriazole (BZT) pre-treated with a low level of hypobromite in weakly alkaline solution (Table 4) exhibited a significantly lower corrosion rate as compared to BZT controls in the absence of hypobromite pre-treatment.

**Table 4.**

| Benzotriazole Chlorine Resistance, after NaOBr and NaOCl Pretreatment | | | | | | |
|---|---|---|---|---|---|---|
| | | NaOX Slug Pretreatment of BZT | | | | |
| ppm Alk | Formulation | Oxidant | ppm NaOX as Cl₂ | # of Slugs | Hours | Corrosion Rate, mpy |
| 15 | Stabilized phosphate | NaOBr | 1 | 3 | 1 | 0.78 |
| 15 | Stabilized phosphate | NaOCl | 1 | 3 | 1 | 6.29 |
| 15 | Stabilized phosphate | --- | --- | --- | --- | 8.56 |

In contrast, BZT pre-treated with a low level of hypochlorite in aqueous solution at pH 7.0 exhibited about the same corrosion rate as compared to a BZT control in the absence of hypochlorite pre-treatment. Unlike TTA, *in-situ* bromination of BZT does not appear to reduce its response as measured by the Hach test (Table 5).

Both examples illustrate the significant improvements in corrosion inhibition and chlorine resistance for aromatic azoles treated with low levels of bromine *in-situ*. While the present invention is described above in connection with preferred or illustrative embodiments, these embodiemnts are not intended to be exhaustive or limiting of the invention. Rather the invention is intended to cover all alternatives, modifications and equivalents defined in the claims.

**Table 5.**

| Effect of Halogenation on Measurement of Benzoltriazole | | | | | | |
|---|---|---|---|---|---|---|
| | | NaOX Slug Pretreatment of BZT | | | | |
| ppm Alk | Formulation | Oxidant | ppm NaOX as Cl₂ | # of Slugs | Hours | Measured ppm BZT |
| 15 | Stabilized phosphate | NaOBr | 1 | 3 | 1 | 2.7 |
| 15 | Stabilized phosphate | NaOCl | 1 | 3 | 1 | 3.6 |
| 15 | Stabilized phosphate | --- | --- | --- | --- | 3.0 |

## Claims

1. A process for inhibiting metal corrosion in an aqueous system comprising the steps of pre-mixing an aqueous solution of one or more aromatic azoles with one or more brominating agents, wherein the total concentration of bromine present expressed as chlorine is between 0.1 to 20 ppm; and adding the bromine treated aromatic azole to the aqueous system.

2. The process of claim 1 wherein the concentration of bromine present expressed as chlorine is between 1 to 5 ppm and wherein the bromine treated azole is added to the aqueous system with one or more water treatment additives selected from the group consisting of scale inhibitors, biocides, dispersants, de-foamers, fluorescent tracer compounds, other corrosion inhibitors and combinations thereof.

3. The process of claim 1 wherein the aromatic azole is selected from the group consisting of tolyltriazole, benzotriazole, butyl benzotriazole, sulfonotolyltriazole, carboxybenzotriazole, 2-mercaptobenzothiazole, N,N-bis(2-ethylhexyl)-ar-methyl-1H-benzotrizole-1-methanamine and combinations thereof and wherein the metal is selected from the group consisting of copper, copper alloys, carbon steels, aluminum, aluminum alloys, stainless steels and combinations thereof.

4. The process of claim 1 wherein the brominating agent is selected from the group consisting of hypobromite, bromine, alkaline solutions of bromine, bromonium ions, bromine complexes (e.g. Lewis acid complexes with aluminum anions), hypobromous acid, mixtures of NaBr and NaOCl, dibromonitrilopropionamide, bromodichlorohydantoin, 1,2-dibromo-2,4-dicyanobutane, 2-bromo-2'-nitrostyrene, 2-bromo-4'-hydroxyacetophenone, 5-bromo-2-nitropropane-1,3-diol, 5-bromo-5-nitro-1,3-dioxane, 1-bromo-3-chloro-5,5-dimethylhydantoin, 3-bromo-1-chloro-5,5-dimethylhydantoin, 1-bromo-3-chloro-5-ethyl-5-methylhydantoin, 3-bromo-1-chloro-5-ethyl-5-methyl-hydantoin and combinations thereof.

5. A process for inhibiting metal corrosion in an aqueous system comprising the steps of contacting a film comprising one or more aromatic azoles covering a metal surface with one or more brominating agents *in-situ*, wherein the total concentration of bromine present expressed as chlorine is between 0.1 to 20 ppm; and exposing the bromine treated film in contact with the aqueous system to an oxidizing halogen.

6. The process of claim 5 wherein the concentration of bromine present expressed as chlorine is between 1 to 5 ppm and the oxidizing halogen is chlorine; wherein the brominating agent is selected from the group consisting of hypobromite, bromine, alkaline solutions of bromine, bromonium ions, bromine complexes (e.g. Lewis acid complexes with aluminum anions), hypobromous acid, mixtures of NaBr and NaOCl, dibromonitrilopropionamide, bromodichlorohydantoin, 1,2-dibromo-2,4-dicyanobutane, 2-bromo-2'-nitrostyrene, 2-bromo-4'-hydroxyacetophenone, 5-bromo-2-nitropropane-1,3-diol, 5-bromo-5-nitro-1,3-dioxane, 1-bromo-3-chloro-5,5-dimethylhydantoin, 3-bromo-1-chloro-5,5-dimethylhydantoin, 1-bromo-3-chloro-5-ethyl-5-methylhydantoin, 3-bromo-1-chloro-5-ethyl-5-methyl-hydan-toin and combinations thereof; and wherein the bromine treated azole is added to the aqueous system with one or more water treatment additives selected from the group consisting of scale inhibitors, biocides, dispersants, de-foamers, fluorescent tracer compounds, other corrosion inhibitors and combinations thereof.

7. The process of claim 5 wherein the metal is selected from the group consisting of copper, copper alloys, carbon steels, aluminum, aluminum alloys, stainless steels and combinations thereof and wherein the aromatic azole is selected from the group consisting of tolyltriazole, benzotriazole, butyl benzotriazole, sulfonotolyltriazole, carboxybenzotriazole, 2-mercaptobenzothiazole, N,N-bis(2-ethylhexyl)-ar-methyl-1H-benzotrizole-1-methanamine and combinations thereof.

8. A process of inhibiting metal corrosion in an aqueous system including one or more aromatic azoles comprising the step of adding one or more halogenating agents, wherein the total concentration of halogen present in the aqueous system and expressed as chlorine is between 0.1 to 20 ppm.

9. The process of claim 8 wherein the aromatic azole is selected from the group consisting of tolyltriazole, benzotriazole, butyl benzotriazole, sulfonotolyltriazole, carboxybenzotriazole, 2-mercaptobenzothiazole, N,N-bis(2-ethylhexyl)-ar-methyl-1H-benzotrizole-1-methanamine and combinations thereof and wherein the halogenating agents are selected from the group consisting of fluorinating agents, brominating agents, iodinating agents and combinations thereof.

10. The process of claim 8 wherein the metal is selected from the group consisting of copper, copper alloys, carbon steels, aluminum, aluminum alloys, stainless steels and combinations thereof.
